(19) Europäisches Patentamt / European Patent Office / Office européen des brevets

(11) **EP 2 057 223 B1**

(12) **EUROPÄISCHE PATENTSCHRIFT**

(45) Veröffentlichungstag und Bekanntmachung des Hinweises auf die Patenterteilung:
**19.01.2011 Patentblatt 2011/03**

(21) Anmeldenummer: **07802518.6**

(22) Anmeldetag: **07.08.2007**

(51) Int Cl.:
***C08K 7/14*** *(2006.01)* ***C08K 13/04*** *(2006.01)*

(86) Internationale Anmeldenummer:
**PCT/EP2007/058165**

(87) Internationale Veröffentlichungsnummer:
**WO 2008/022910 (28.02.2008 Gazette 2008/09)**

(54) **POLYAMIDFORMMASSEN MIT VERBESSERTER WÄRMEALTERUNGS- UND HYDROLYSEBESTÄNDIGKEIT**

POLYAMIDE MOLDING MATERIALS WITH IMPROVED THERMAL AGING AND HYDROLYSIS STABILITY

MATIÈRE POUR MOULAGE À BASE DE POLYAMIDE PRÉSENTANT UNE MEILLEURE RÉSISTANCE AU VIEILLISSEMENT THERMIQUE ET À L'HYDROLYSE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **23.08.2006 EP 06119377**

(43) Veröffentlichungstag der Anmeldung:
**13.05.2009 Patentblatt 2009/20**

(73) Patentinhaber: **BASF SE**
**67056 Ludwigshafen (DE)**

(72) Erfinder:
- **EIBECK, Peter**
**67061 Ludwigshafen (DE)**
- **ENGELMANN, Jochen**
**67056 Ludwigshafen (DE)**
- **NEUHAUS, Ralf**
**69124 Heidelberg (DE)**
- **BERNNAT, Anka**
**67105 Schifferstadt (DE)**

(56) Entgegenhaltungen:
**EP-A- 0 291 833 EP-A- 0 673 762**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 057 223 B1

## Beschreibung

Die vorliegende Erfindung betrifft thermoplastische Formmassen, enthaltend:

(A) 20 - 85 Gew.-% mindestens eines Polyamids mit einer Zahl an Aminoendgruppen von ≥ 50 mmol/kg,

(B) 14,9 - 60 Gew.-% Glasfasern,

(C) 0,01 - 2 Gew.-% mindestens eines Wärmestabilisators,

(D) 0 - 1,5 Gew.-% mindestens eines Entformungshilfsmittels und

(E) 0 - 30 Gew.-% mindestens eines Zusatzstoffes,

wobei die Summe der Gewichtsprozente von (A) - (E) 100 beträgt. Weiterhin betrifft die Erfindung die Verwendung zur Herstellung von Formkörpern jeglicher Art, und Formkörper, die aus den erfindungsgemäßen Formmassen erhalten wurden.

Thermoplastische Polymere wie Polyamide werden häufig in Form von glasfaserverstärkten Formmassen als Konstruktionswerkstoff für Bauteile eingesetzt, die während ihres Einsatzes erhöhten Temperaturen ausgesetzt sind und/oder in Kontakt mit Flüssigkeiten treten. Dadurch kann es zu thermooxidativen Schädigungen und/oder hydrolytischem Abbau des Polymers kommen. Beide Vorgänge können die Lebensdauer dieser Materialien negativ beeinflussen. Durch Zusatz von Wärmestabilisatoren kann das Auftreten der thermooxidativen Schädigung zwar hinausgezögert werden, es kann aber dadurch nicht dauerhaft verhindert werden, dass sich die Eigenschaften der Polyamide durch Wärmeeinwirkung nachteilig verändern. Eine negative Veränderung der Eigenschaften der Polyamide äußert sich beispielsweise in einem Abfallen der mechanischen Kennwerte. Eine Verbesserung der Wärmealterungs- und/oder Hydrolysebeständigkeit von Polyamiden ist überaus wünschenswert, da dadurch längere Betriebszeiten für Bauteile erreicht werden können, die mit Flüssigkeiten in Kontakt treten und/oder einer erhöhten Temperatur ausgesetzt sind.

Im Stand der Technik sind verschiedene Vorgehensweisen beschrieben, die Wärmestabilität und/oder die Hydrolysebeständigkeit von thermoplastischen Polymeren, insbesondere von Polyamiden, zu erhöhen.

Aus Kunststoff Handbuch, 3. Technische Thermoplaste, 4. Polyamide, S. 77 bis 84, 1998 Carl Hanser Verlag München Wien ist der Einsatz von verschiedenen Wärmestabilisatoren in Polyamiden bekannt. Als Stabilisatoren können Verbindungen ausgewählt aus sterisch gehinderten Phenolen und sekundären Aminen eingesetzt werden.

WO 97/08222 betrifft ein Verfahren zur Herstellung von Polyamiden durch Polymerisation von Dicarbonsäuren mit Diaminen, Aminocarbonsäuren oder Lactamen, wobei entweder die Säure oder das Amin im Überschuss vorhanden ist, so dass das Verhältnis von Carbonsäure- zu Aminoendgruppen im Polymer wenigstens 2.0 : 1.0 beträgt. Die Polyamide, welche hergestellt werden durch das Verfahren gemäß WO 97/08222, zeichnen sich durch eine verbesserte Schmelzviskosität und Fließfähigkeit aus.

EP 0 129 974 A2 offenbart Bauteile, die gegen warmes Frostschutzmittel resistent sind, und die neben Polyamiden ausgewählt aus Polyamid 66, Polyamid 6 und Polyamid 610, 0.1 bis 10 Gew.-% eines Copolymers aus Monomeren, die ethylenisch ungesättigt sind, enthalten. Diese Copolymere weisen funktionelle Gruppen an der Polymerhauptkette auf, welche Reaktionen mit den Endgruppen des Polyamids eingehen können. Die funktionellen Gruppen sind bevorzugt Carbonsäure- oder Carbonsäureanhydridgruppen. Es wird beispielsweise Acrylsäure oder Maleinsäureanhydrid eingesetzt.

EP 1 424 361 A1 offenbart Formmassen enthaltend ein thermoplastisches Polykondensat, Verstärkungsstoffe, vernetzungsfähige Additive und weitere polymere Komponenten. Diese Formmasse wird im Anschluss an die thermoplastische Formgebung mit beta-, gamma-, Röntgen-, UV- oder Elektronenstrahlung bestrahlt, und dadurch zumindest teilweise vernetzt. Durch die zumindest teilweise Vernetzung weisen die thermoplastischen Formmassen gemäß EP 1 424 361 A1 eine erhöhte Beständigkeit gegen hydrolytischen Abbau auf.

JP 3200868 offenbart Polymerblends aus Polyamiden mit unpolaren, hydrophoben Blendkomponenten, ausgewählt beispielsweise aus Copolymeren aus Styrol und Maleinsäureanhydrid, sowie modifiziertem Polypropylen. Durch die Anwesenheit dieser unpolaren, hydrophoben Blendpartner wird die Hydrolysebeständigkeit deutlich erhöht.

Aus dem Stand der Technik ist es bekannt, die Wärmestabilität von Polyamiden durch Zusatz von Wärmestabilisatoren und die Schmelzviskosität und Fließfähigkeit von Polyamiden durch ein bestimmtes Endgruppenverhältnis positiv beeinflussen zu können. Des Weiteren ist es aus dem Stand der Technik bekannt, die Hydrolysebeständigkeit von Polyamiden dadurch zu erhöhen, dass die Polyamide mit unpolaren, hydrophoben Copolymeren enthaltend Monomere ausgewählt aus Styrol, Maleinsäureanhydrid, modifiziertem Polypropylen oder Acrylsäure versetzt werden. Die daraus resultierende gesenkte Polarität der thermoplastischen Formmasse ergibt eine erhöhte Hydrolysebeständigkeit. Eine weitere im Stand der Technik vorgeschlagene Methode, die Hydrolysebeständigkeit von thermoplastischen Formmassen zu erhöhen, besteht darin, vernetzbare Additive hinzuzufügen und diese durch Bestrahlung zu vernetzen.

Nachteilig ist, dass es bislang nicht gelungen ist, die Wärmestabilität von thermoplastischen Formmassen, die zur Verstärkung Glasfasern enthalten, zu erhöhen, oder die Hydrolysebeständigkeit von glasfaserverstärkten thermoplastischen Formmassen ohne den Einsatz von hydrophoben Comonomeren oder Copolymeren zu erhöhen.

Aufgabe der vorliegenden Erfindung ist es daher, glasfaserverstärkte thermoplastische Formmassen bereitzustellen, die sich durch eine verbesserte Wärmestabilität und eine verbesserte Hydrolysebeständigkeit auszeichnen. Dies soll insbesondere ohne den Einsatz hydrophober Comonomere oder Copolymere geschehen. Eine weitere Aufgabe der vorliegenden Erfindung ist es, wärme- und hydrolysestabile Bauteile bereitzustellen, die aus den erfindungsgemäßen thermoplastischen Formmassen erhältlich sind.

Demgemäß wurden die eingangs definierten Formmassen gefunden. Bevorzugte Ausführungsformen sind den Unteransprüchen zu entnehmen.

Die einzelnen Komponenten der erfindungsgemäßen thermoplastischen Formmassen werden im Folgenden beschrieben.

Komponente (A)

Als Komponente (A) enthalten die erfindungsgemäßen thermoplastischen Formmassen 20 bis 85 Gew.-%, bevorzugt 40 bis 75 Gew.-% mindestens eines Polyamides.

Das Polyamid weist eine Zahl der primären Aminoendgruppen von ≥ 50 mmol/kg, bevorzugt ≥ 60 mmol/kg auf. Die Anzahl der primären Aminoendgruppen der erfindungsgemäß einsetzbaren Polyamide kann bei ihrer Herstellung durch ein passendes Verhältnis von in den Monomeren vorliegenden Amino- zu Carbonsäureendgruppen eingestellt werden. Das Vorliegen dieser speziellen Zahl an primären Aminoendgruppen trägt dazu bei, die Wärme- und/oder die Hydrolysestabilität der erfindungsgemäßen thermoplastischen Formmassen zu erhöhen.

Die Bestimmung der Aminoendgruppen kann man beispielsweise mittels Titration einer Lösung des Polyamids in Gegenwart eines Indikators durchführen. Dazu wird das Polyamid in einem Gemisch aus Phenol und Methanol (z.B. 75 Gew.-% Phenol und 25 Gew.-% Methanol) unter Erwärmen gelöst. Beispielsweise kann man die Mischung unter Rückfluss am Siedepunkt halten, bis das Polymer gelöst ist. Die abgekühlte Lösung wird mit einem geeigneten Indikator bzw. einer Indikatormischung (z.B. methanolische Lösung aus Benzylorange und Methylenblau) versetzt und mit einer methanolhaltigen Perchlorsäurelösung in Glycol, bis zum Farbumschlag titriert. Aus dem Perchlorsäureverbrauch wird die Aminoendgruppenkonzentration berechnet.

Alternativ kann man die Titration ohne Indikator auch potentiometrisch mit einer Perchlorsäurelösung in Ethylenglycol durchführen, wie in der WO 92/26865 auf Seite 11 beschrieben.

Die Bestimmung der Carboxylendgruppen kann man z.B. ebenfalls durch Titration einer Lösung des Polyamids unter Verwendung eines Indikators vornehmen. Dazu wird das Polyamid in Benzylalkohol (Phenylmethanol) unter Erwärmen, z.B. bis zum Sieden, gelöst, wobei man ein Steigrohr aufsetzt und Stickstoffgas einleitet. Die noch heiße Lösung wird mit einem geeigneten Indikator (z.B. propanolische Lösung von Kresolrot) versetzt und sofort mit einer alkoholischen Kaliumhydroxidlösung (KOH gelöst in einer Mischung aus Methanol, 1-Propanol und 1-Hexanol) bis zum Farbumschlag titriert. Aus dem KOH-Verbrauch wird die Carboxylendgruppenkonzentration berechnet.

Alternativ kann man die Titration ohne Indikator auch konduktometrisch mit einer NaOH-Lösung in Benzylalkohol durchführen, wie in der WO 02/26865 auf Seite 11 - 12 beschrieben.

In einer weiteren bevorzugten Ausführungsform weist das Polyamid einen molaren Anteil an mit einem Diamin geregelten Ketten von ≥ 30 mol-%, bevorzugt ≥ 40 mol-%, besonders bevorzugt ≥ 50 mol-% auf. Das Vorliegen von wenigstens 30 mol-% an Polymerketten, die mit einem Diamin geregelt sind, trägt mit dazu bei, die Stabilität gegen thermooxidativen Abbau und die Hydrolysebeständigkeit signifikant zu erhöhen. In einer bevorzugten Ausführungsform wird das Diamin zu Beginn der Polymerisation zu der Monomermischung hinzu gegeben. In einer weiteren bevorzugten Ausführungsform wird das Diamin bei der Herstellung des Polyamids nachträglich zu der Polymerschmelze dosiert.

In einer weiteren bevorzugten Ausführungsform weist das Polyamid eine Viskositätszahl von 100 bis 250 ml/g, bevorzugt 120 bis 200 ml/g, besonders bevorzugt 140 bis 170 ml/g auf. Die Viskositätszahl der erfindungsgemäßen Polyamide trägt ebenfalls dazu bei, die Wärmestabilität und/oder die Hydrolysebeständigkeit der thermoplastischen Formmassen zu erhöhen. Die Viskositätszahl VZ wird gemessen an einer Lösung in 96 %iger Schwefelsäure der Konzentration c = 5 g/l, entsprechend der ISO307.

Geeignete Polyamide sind z.B. in den US-Patentschriften 2,071,250, 2,071,251, 2,130,523, 2,130,948, 2,241,322, 2,312,966, 2,512,606 und 3,393,210 beschrieben. Es können aliphatische, teilaromatische oder aromatische Polyamide eingesetzt werden, wobei aliphatische Polyamide bevorzugt sind. Der Begriff "aliphatische Polyamide" bedeutet, dass die Polyamide ausschließlich aus aliphatischen Monomeren aufgebaut sind. Der Begriff "teilaromatische Polyamide" bedeutet, dass die Polyamide sowohl aus aliphatischen als auch aus aromatischen Monomeren aufgebaut sind. Der Begriff "aromatische Polyamide" bedeutet, dass die Polyamide ausschließlich aus aromatischen Monomeren aufgebaut sind.

Beispielsweise können geeignete Polyamide z.B. durch Kondensation entsprechender Mengen einer gesättigten oder einer aromatischen Dicarbonsäure mit 4 bis 12 Kohlenstoffatomen, mit einem gesättigten oder aromatischen Diamin, welches 2 bis 14 Kohlenstoffatome aufweist oder durch Kondensation von Aminocarbonsäuren bzw. Polyaddition von entsprechenden Lactamen mit 3 bis 12 Kohlenstoffatomen hergestellt werden.

Es ist auch möglich, Polyamide zu verwenden, die durch Copolykondensation von zwei oder mehr der oben genannten Monomeren hergestellt worden sind, z.B. Copolymere aus Adipinsäure, Isophthalsäure oder Terephthalsäure und Hexamethylendiamin oder Copolymere aus Caprolactam, Terephthalsäure und Hexamethylendiamin. Derartige teilaromatische Copolyamide enthalten 40 bis 90 Gew.-% Einheiten, die sich von Terephthalsäure und Hexamethylendiamin ableiten. Ein geringer Anteil der Terephthalsäure, vorzugsweise nicht mehr als 10 Gew.-%, der gesamten eingesetzten aromatischen Dicarbonsäuren kann durch Isophthalsäure oder andere aromatische Dicarbonsäuren, vorzugsweise solche, in denen die Carboxylgruppen in para-Stellung stehen, ersetzt werden.

Als Monomere kommen auch cyclische Diamine wie die der allgemeinen Formel (I)

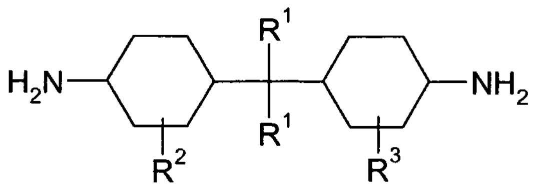

(I)

in der $R^1$ Wasserstoff oder eine $C_1$-$C_4$-Alkylgruppe, $R^2$ eine $C_1$-$C_4$-Alkylgruppe oder Wasserstoff und $R^3$ eine $C_1$-$C_4$-Alkylgruppe oder Wasserstoff bedeutet, in Betracht.

Besonders bevorzugte Diamine (I) sind Bis-(4-aminocyclohexyl)-methan, Bis-(4-amino-3-methylcyclohexyl)-methan, Bis-(4-aminocyclohexyl)-2,2-propan oder Bis-(4-amino-3-methylcyclohexyl)-2,2-propan. Als weitere Diamine (I) sind 1,3- oder 1,4-Cyclohexandiamin oder Isophorondiamin genannt.

Neben den Einheiten, die sich von Terephthalsäure und Hexamethylendiamin ableiten, enthalten die teilaromatischen Copolyamide Einheiten, die sich von ε-Caprolactam ableiten und/oder Einheiten, die sich von Adipinsäure und Hexamethylendiamin ableiten.

Der Anteil an Einheiten, die sich von ε-Caprolactam ableiten, kann bis zu 50 Gew.-%, vorzugsweise 20 bis 50 Gew.-%, insbesondere 25 bis 40 Gew.-% betragen, während der Anteil an Einheiten, die sich von Adipinsäure und Hexamethylendiamin ableiten, bis zu 60 Gew.-%, vorzugsweise 30 bis 60 Gew.-% und insbesondere 35 bis 55 Gew.-% betragen kann.

Die Copolyamide können sowohl Einheiten von ε-Caprolactam als auch Einheiten von Adipinsäure und Hexamethylendiamin enthalten, in diesem Fall ist darauf zu achten, dass der Anteil an Einheiten, die frei von aromatischen Gruppen sind, mindestens 10 Gew.-% beträgt, vorzugsweise mindestens 20 Gew.-%. Das Verhältnis der Einheiten, die sich von ε-Caprolactam und von Adipinsäure und Hexamethylendiamin ableiten, unterliegt dabei keiner besonderen Beschränkung.

Die Herstellung der teilaromatischen Copolyamide kann z.B. nach dem in den EP-A-0 129 195 und EP-A-0 129 196 beschriebenen Verfahren erfolgen.

Weitere geeignete Copolyamide sind im wesentlichen aufgebaut aus 30 bis 44 mol-%, vorzugsweise 32 bis 40 mol-% und insbesondere 32 bis 38 mol-% Einheiten, welche sich von Terephthalsäure ableiten, 6 bis 20 mol-%, vorzugsweise 10 bis 18 mol-% und insbesondere 12 bis 18 mol-% Einheiten, welche sich von Isophthalsäure ableiten, 43 bis 49,5 mol-%, vorzugsweise 46 bis 48,5 mol-% und insbesondere 46,3 bis 48,2 mol-% Einheiten, welche sich von Hexamethylendiamin ableiten, 0,5 bis 7 mol-%, vorzugsweise 1,5 bis 4 mol-% und insbesondere 1,8 bis 3,7 mol-% Einheiten, welche sich von aliphatischen cyclischen Diaminen mit 6 bis 30, vorzugsweise 13 bis 29 und insbesondere 13 bis 17 C-Atomen ableiten, vorzugsweise der vorstehenden allgemeinen Formel (I), 0 bis 4 mol-% weiteren von den vorgenannten Monomeren verschiedenen polyamidbildenden Monomeren, wobei die Molprozente der Komponenten zusammen 100 mol-% ergeben.

Als weitere polyamidbildende Monomere können aromatische Dicarbonsäuren, beispielsweise substituierte Terephthal- und Isophthalsäuren wie 3-t-Butylisophthalsäure, mehrkernige Dicarbonsäuren, z.B. 4,4'- und 3,3'-Diphenyldicarbonsäure, 4,4'- und 3,3'-Diphenylmethandicarbonsäure, 4,4'- und 3,3'- Diphenylsulfondicarbonsäure, 1,4- oder 2,6-Naphthalindicarbonsäure und Phenoxyterephthalsäure, eingesetzt werden.

Weitere polyamidbildende Monomere können sich z.B. von Dicarbonsäuren mit 4 bis 16 Kohlenstoffatomen und aliphatischen Diaminen mit 4 bis 16 Kohlenstoffatomen sowie von Aminocarbonsäuren bzw. entsprechenden Lactamen mit 7 bis 12 Kohlenstoffatomen ableiten. Als geeignete Monomere dieser Typen seien hier nur Suberinsäure, Azelainsäure oder Sebacinsäure als Vertreter der aliphatischen Dicarbonsäuren, 1,4-Butandiamin, 1,5-Pentandiamin

oder Piperazin, als Vertreter der Diamine und Caprolactam, Capryllactam, Önanthlactam, Laurinlactam und a-Aminoundecansäure als Vertreter von Lactamen bzw. Aminocarbonsäuren genannt.

"Ableitbar von" oder "ableiten von" bedeuten im Rahmen der vorliegenden Erfindung, dass die genannten Monomere selbst oder Monomere, die sich aus den genannten Monomeren durch Hinzufügen gleicher oder verschiedener, aliphatischer oder aromatischer Kohlenwasserstoffreste ergeben, eingesetzt werden.

Die Schmelzpunkte dieser Copolyamide liegen in der Regel im Bereich von 290 bis 340°C, bevorzugt von 292 bis 330°C, wobei dieser Schmelzpunkt mit einer hohen Glasübergangstemperatur von in der Regel > 100°C, insbesondere > 120°C, jeweils im trockenen Zustand verbunden ist.

Selbstverständlich können auch Mischungen dieser Copolyamide eingesetzt werden, wobei das Mischungsverhältnis beliebig ist.

Geeignete Verfahren zur Herstellung der Copolyamide sind dem Fachmann bekannt, siehe auch EP-A-0 702 058.

Bevorzugt wird in den erfindungsgemäßen thermoplastischen Formmassen mindestens ein lineares, aliphatisches Polyamid eingesetzt. Diese Polyamide weisen in einer bevorzugten Ausführungsform einen Schmelzpunkt über 200°C auf.

Besonders bevorzugt werden in den thermoplastischen Formmassen Polyamide eingesetzt ausgewählt aus der Gruppe bestehend aus Polyhexamethylenadipinsäureamid (Nylon 66, Polyamid 66), einer Mischung von Polyamiden mit einem Polyamid 66-Anteil von wenigstens 80 Gew.-% oder einem Copolyamid, dessen Bausteine zu wenigstens 80 Gew.-% von Adipinsäure und Hexamethylendiamin ableitbar sind, Polyhexamethylenazelainsäureamid (Nylon 69, Polyamid 69), Polyhexamethylensebacinsäureamid (Nylon 610, Polyamid 610), Polyhexamethylendodecandisäureamid (Nylon 612, Polyamid 612), die durch Ringöffnung von Lactamen erhaltenen Polyamide wie Polycaprolactam (Nylon 6, Polyamid 6), Polylaurinsäurelactam, Poly-11-aminoundecansäure und ein Polyamid aus Di(p-aminocyclohexyl)-methan und Dodecandisäure, Polyamide, die z.B. durch Kondensation von 1,4-Diaminobutan mit Adipinsäure unter erhöhter Temperatur erhältlich sind (Nylon 46, Polyamid 46) und Mischungen davon. Herstellungsverfahren für Polyamide dieser Struktur sind z. B. in den EP-A-0038 094, EP A-0 038 582 und EP-A-0 039 524 beschrieben.

Polycaprolactam (Nylon 6, Polyamid 6) kann auch erhalten werden durch eine Polykondensationsreaktion von 6-Amino-hexansäure.

Ganz besonders bevorzugt sind in den erfindungsgemäßen thermoplastischen Formmassen Polyamide, welche ausgewählt sind aus der Gruppe bestehend aus Polyhexamethylenadipinsäureamid (Nylon 66, Polyamid 66), einer Mischung von Polyamiden mit einem Polyamid 66-Anteil von wenigstens 80 Gew.-% oder einem Copolyamid, dessen Bausteine zu wenigstens 80 Gew.-% von Adipinsäure und Hexamethylendiamin ableitbar sind, Polycaprolactam (Nylon 6, Polyamid 6) oder deren Mischungen.

Komponente (B)

Die erfindungsgemäßen thermoplastischen Formmassen enthalten als Komponente (B) 14,9 bis 60 Gew.-%, bevorzugt 20 bis 49 Gew.-% Glasfasern.

In den erfindungsgemäßen thermoplastischen Formmassen können alle dem Fachmann bekannten und für den Einsatz in thermoplastischen Formmassen geeigneten Glasfasern vorliegen. Diese Glasfasern können nach dem Fachmann bekannten Verfahren hergestellt und, gegebenenfalls, oberflächenbehandelt werden. Die Glasfasern können zur besseren Verträglichkeit mit dem Matrixmaterial mit einer Schlichte, ausgerüstet sein, wie sie z.B. in DE 10117715 beschrieben.

In einer bevorzugten Ausführungsform werden Glasfasern mit einem Durchmesser von 5 bis 15 $\mu$m, bevorzugt 7 bis 13 $\mu$m, besonders bevorzugt 9 bis 11 $\mu$m eingesetzt.

Die Einarbeitung der Glasfasern kann sowohl in Form von Schnittglasfasern als auch in Form von Endlossträngen (Rovings) erfolgen. Die Länge der einsetzbaren Glasfasern beträgt in der Regel vor Einarbeitung als Schnittglasfasern in die thermoplastischen Formmassen typischerweise 4 bis 5 mm. Nach der Verarbeitung der Glasfasern, beispielsweise durch Co-Extrusion, mit den anderen Komponenten liegen die Glasfasern üblicherweise in einer mittleren Länge von 100 bis 400 $\mu$m, bevorzugt 200 bis 350 $\mu$m vor.

Komponente (C)

Als Komponente C enthalten die erfindungsgemäßen thermoplastischen Formmassen 0,01 bis 2 Gew.-%, bevorzugt 0,05 bis 1,5 Gew.-%, besonders bevorzugt 0,1 bis 1,5 Gew.-% mindestens eines Wärmestabilisators.

In einer bevorzugten Ausführungsform sind die Wärmestabilisatoren ausgewählt aus der Gruppe bestehend aus

- Verbindungen des ein- oder zweiwertigen Kupfers, z.B. Salze des ein- oder zweiwertigen Kupfers mit anorganischen oder organischen Säuren oder ein- oder zweiwertigen Phenolen, die Oxide des ein- oder zweiwertigen Kupfers,

oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren. Besonders bevorzugt sind die einwertigen Kupferverbindungen CuCl, CuBr, CuI, CuCN und $Cu_2O$, sowie die zweiwertigen Kupferverbindungen $CuCl_2$, $CuSO_4$, CuO, Kupfer(II)acetat oder Kupfer(II)stearat. Sofern eine Kupferverbindung verwendet wird, beträgt vorzugsweise die Menge an Kupfer 0,005 bis 0,5, insbesondere 0,005 bis 0,3 und besonders bevorzugt 0,01 bis 0,2 Gew.-%, bezogen auf die Summe der Komponenten A) bis E).

Die Kupferverbindungen sind handelsüblich bzw. ihre Herstellung ist dem Fachmann bekannt. Die Kupferverbindung kann als solche oder in Form von Konzentraten eingesetzt werden. Unter Konzentrat ist dabei ein Polymer, vorzugsweise gleicher chemischer Natur wie Komponente (A), zu verstehen, welches das Kupfersalz in hoher Konzentration enthält. Der Einsatz von Konzentraten ist ein übliches Verfahren und wird besonders häufig dann angewandt, wenn sehr geringe Mengen eines Einsatzstoffes zu dosieren sind. Vorteilhafterweise werden die Kupferverbindungen in Kombination mit weiteren Metallhalogeniden, insbesondere Alkalihalogenide wie NaI, KI, NaBr, KBr eingesetzt, wobei das molare Verhältnis von Metallhalogenid zu Kupfer 0,5 bis 20, bevorzugt 1 bis 10 und besonders bevorzugt 2 bis 5 beträgt.

- Stabilisatoren auf Basis sekundärer aromatischer Amine, wobei diese Stabilisatoren vorzugsweise in einer Menge von 0,2 bis 2, bevorzugt 0,5 bis 1,5 Gew.-% vorliegen,

- Stabilisatoren auf Basis sterisch gehinderter Phenole, wobei diese Stabilisatoren vorzugsweise in einer Menge von 0,05 bis 1,5, bevorzugt 0,1 bis 1 Gew.-% vorliegen, und

- Mischungen der vorstehend genannten Stabilisatoren.

Besonders bevorzugte Beispiele für erfindungsgemäß einsetzbare Stabilisatoren auf Basis sekundärer aromatischer Amine sind Addukte aus Phenylendiamin mit Aceton (Naugard A), Addukte aus Phenylendiamin mit Linolen, Naugard 445 (II), N,N'-Dinaphthyl-p-phenylendiamin (III), N-Phenyl-N'-cyclohexyl-p-phenylendiamin (IV) oder Mischungen von zwei oder mehreren davon

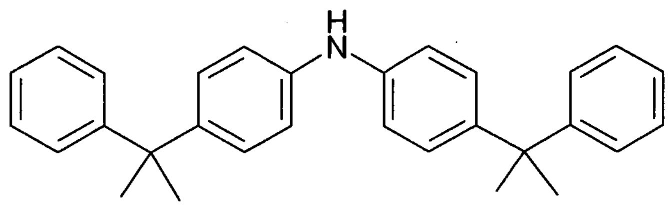

(II)

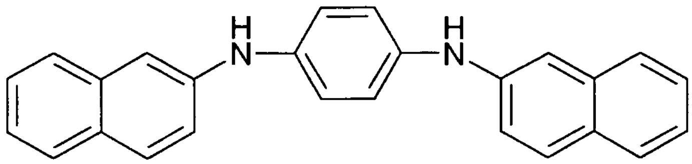

(III)

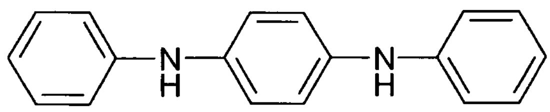

(IV)

Bevorzugte Beispiele für erfindungsgemäß einsetzbare Stabilisatoren auf Basis sterisch gehinderter Phenole sind N,N'-Hexamethylen-bis-3-(3,5-di-tert-butyl-4-hydroxyphenyl)-propionamid (V), Bis-(3,3-bis-(4'-hydroxy-3'-tert-butylphenyl)-butansäure)-glykolester (VI), 2,1'-Thioethylbis-(3-(3,5-di.tert-butyl-4-hydroxyphenyl)-propionat (VII), 4-4'-Butyliden-bis-(3-methyl-6-tert.-butylphenol) (VIII), Triethylenglykol-3-(3-tert-butyl-4-hydroxy-5-methylphenyl)-propionat (IX) oder Mischungen von zwei oder mehr davon

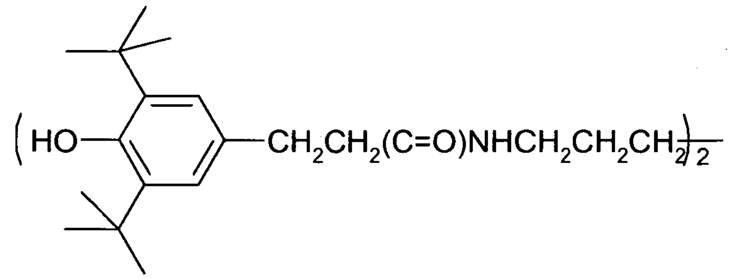

(V)

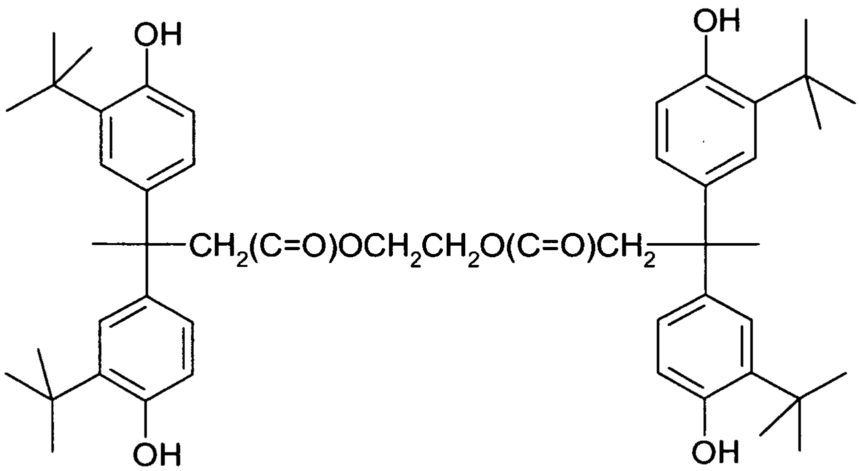

(VI)

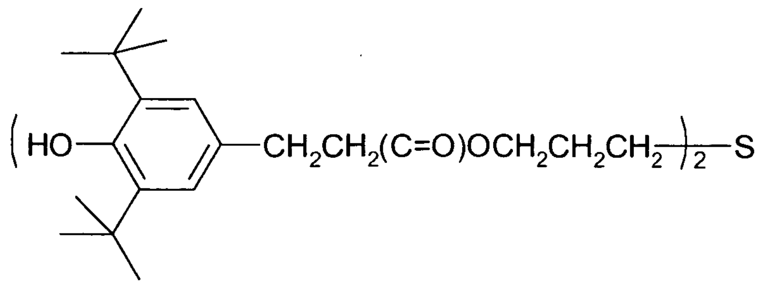

(VII)

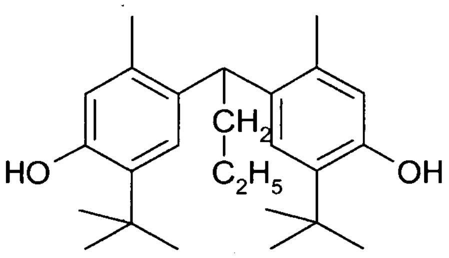

(VIII)

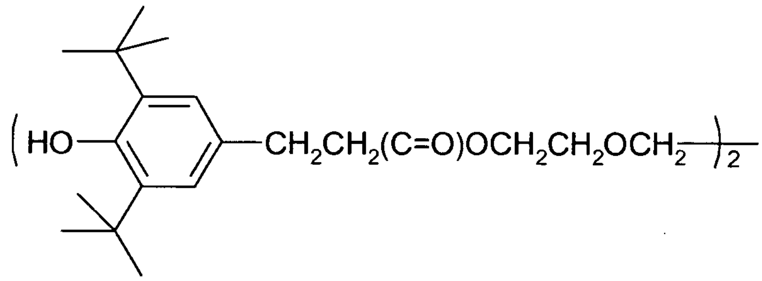

(IX)

Komponente (D)

Die erfindungsgemäßen thermoplastischen Formmassen können 0 bis 1,5 Gew.-%, bevorzugt 0,05 bis 1,5 Gew.-%, besonders bevorzugt 0,1 bis 1 Gew.-% eines Entformungshilfsmittel enthalten.

Entformungshilfsmittel werden der Formmasse zugegeben, um das Entformen des hergestellten Produkts, d.h. das Ablösen des Formteils aus der Form, zu erleichtern.

In einer bevorzugten Ausführungsform sind die Entformungsmittel ausgewählt aus der Gruppe bestehend aus Fettsäuren und deren Alkali- oder Erdalkali- oder Zinksalzen, Diamiden aus Alkylendiamin und Fettsäuren. Besonders bevorzugt werden Entformungsmittel eingesetzt, ausgewählt aus der Gruppe bestehend aus Calciummontanat, Stearinsäure, Behensäure, Stearylalkohol, Stearinsäurealkylester und -amide sowie Ester des Pentaerythrits mit langkettigen Fettsäuren wie Stearin, Ca- oder Zn-stearat.

Komponente (E)

Die erfindungsgemäßen thermoplastischen Formmassen können 0 bis 30 Gew.-%, bevorzugt 0 bis 20 Gew.-% weitere Zusatzstoffe (Additive) enthalten.

Als Additive können alle dem Fachmann bekannten Additive für thermoplastische Formmassen enthaltend Polyamide oder Copolyamide eingesetzt werden. Diese sind bevorzugt ausgewählt aus der Gruppe bestehend aus Pigmenten, mineralischen Füllstoffen, Schlagzähmodifier, Flammschutzmittel, Nukleierungsmittel, Natriumhypophosphit und Mischungen davon.

Die Pigmente zur Einfärbung von Thermoplasten sind allgemein bekannt, siehe z.B. R. Gächter und H. Müller, Taschenbuch der Kunststoffadditive, Carl Hanser-Verlag, 1983, Seite 494 bis 510.

Als erste bevorzugte Gruppe von Pigmenten sind Weißpigmente zu nennen wie Zinkoxid, Bleiweiß (2 $PbCO_3$ $Pb(OH)_2$), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz ($Fe_3O_4$), Spinellschwarz ($Cu(Cr,Fe)_2O_4$), Manganschwarz (Mischung aus Mangandioxid, Siliciumdioxid und Eisenoxid), Kobaltschwarz und Antimonschwarz sowie besonders bevorzugt Russ, der meist in Form von Furnace- oder Gasruß eingesetzt wird.

Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel üblich.

Weiterhin kann es von Vorteil sein, die genannten Pigmente beziehungsweise Farbstoffe in Mischungen einzusetzen, zum Beispiel Russ mit Kupferphthalocyaninen, da allgemein die Farbdispergierung im Thermoplasten erleichtert wird.

Als teilchenförmige Füllstoffe eignen sich Glaskugeln, Glasplättchen, amorphe Kieselsäure, Carbonate wie Calciumcarbonat (Kreide), gepulverter Quarz, Glimmer, unterschiedlichste Silikate wie Tone, Muskovit, Biotit, Suzoit, Zinnmaletit, Talkum, Chlorit, Phlogophit, Feldspat, Calciumsilikate wie Wollastonit oder Aluminiumsilikate wie Kaolin, besonders kalzinierter Kaolin.

Besonders bevorzugt werden als teilchenförmige Füllstoffe Talkum, Kaolin, wie calcinierter Kaolin oder Wollastonit oder Mischungen aus vorstehenden Füllstoffen.

Beispiele für Schlagzähmodifier sind Kautschuke, welche funktionelle Gruppen aufweisen können. Es können auch Mischungen aus zwei oder mehreren unterschiedlichen schlagzähmodifizierenden Kautschuken eingesetzt werden.

Kautschuke, die die Zähigkeit der Formmassen erhöhen enthalten im allgemeinen einen elastomeren Anteil, der eine Glasübergangstemperatur von weniger als -10°C, vorzugsweise von weniger als -30°C aufweist, und sie enthalten mindestens eine funktionelle Gruppe, die mit dem Polyamid reagieren kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- oder Oxazolingruppen, bevorzugt Carbonsäureanhydridgruppen.

Zu den bevorzugten funktionalisierten Kautschuken zählen funktionalisierte Polyolefinkautschuke, die aus folgenden Komponenten aufgebaut sind:

1. 40 bis 99 Gew.-% mindestens eines alpha-Olefins mit 2 bis 8 C-Atomen,
2. 0 bis 50 Gew.-% eines Diens,
3. 0 bis 45 Gew.-% eines $C_1$-$C_{12}$-Alkylesters der Acrylsäure oder Methacrylsäure oder Mischungen derartiger Ester,
4. 0 bis 40 Gew.-% einer ethylenisch ungesättigten $C_2$-$C_{20}$-Mono- oder Dicarbonsäure oder eines funktionellen Derivates einer solchen Säure,
5. 0 bis 40 Gew.-% eines Epoxygruppen enthaltenden Monomeren, und
6. 0 bis 5 Gew.-% sonstiger radikalisch polymerisierbarer Monomerer,

wobei die Summe der Komponenten 3) bis 5) mindestens 1 bis 45 Gew.-% beträgt, bezogen auf die Komponenten 1) bis 6).

Als Beispiele für geeignete alpha -Olefine können Ethylen, Propylen, 1-Butylen, 1-Pentylen, 1-Hexylen, 1-Heptylen, 1-Octylen, 2-Methylpropylen, 3-Methyl-1-butylen und 3-Ethyl-1-butylen genannt werden, wobei Ethylen und Propylen bevorzugt sind.

Als geeignete Dien-Monomere seien beispielsweise konjugierte Diene mit 4 bis 8 C-Atomen, wie Isopren und Butadien, nicht-konjugierte Diene mit 5 bis 25 C-Atomen, wie Penta-1,4-dien, Hexa-1,4-dien, Hexa-1,5-dien, 2,5-Dimethylhexa-1,5-dien und Octa-1,4-dien, cyclische Diene, wie Cyclopentadien, Cyclohexadiene, Cyclooctadiene und Dicyclopentadien, sowie Alkenylnorbornen, wie 5-Ethyliden-2-norbornen, 5-Butyliden-2-norbornen, 2- Methallyl-5-norbornen, 2-Isopropenyl-5-norbornen und Tricyclodiene, wie 3- Methyltricyclo-(5.2.1.0.2.6)-3,8-decadien, oder deren Mischungen genannt. Bevorzugt werden Hexa-1,5-dien, 5-Ethyliden-norbornen und Dicyclopentadien.

Der Diengehalt beträgt vorzugsweise 0,5 bis 50, insbesondere 2 bis 20 und besonders bevorzugt 3 bis 15 Gew.-%, bezogen auf das Gesamtgewicht des Olefinpolymerisats. Beispiele für geeignete Ester sind Methyl-, Ethyl-, Propyl-, n-Butyl, i-Butyl- und 2-Ethylhexyl-, Octyl- und Decylacrylate bzw. die entsprechenden Ester der Methacrylsäure. Von diesen werden Methyl-, Ethyl-, Propyl-, n-Butyl- und 2- Ethylhexylacrylat bzw. -methacrylat besonders bevorzugt.

Anstelle der Ester oder zusätzlich zu diesen können in den Olefinpolymerisaten auch säurefunktionelle und/ oder latent säurefunktionelle Monomere ethylenisch ungesättigter Mono- oder Dicarbonsäuren enthalten sein.

Beispiele für ethylenisch ungesättigte Mono- oder Dicarbonsäuren sind Acrylsäure, Methacrylsäure, tertiäre Alkylester dieser Säuren, insbesondere tert.-Butylacrylat und Dicarbonsäuren, wie Maleinsäure und Fumarsäure, oder Derivate dieser Säuren sowie deren Monoester.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit 2 bis 20 C-Atomen, insbesondere Maleinsäureanhydrid und tertiäre $C_1$-$C_{12}$-Alkylester der vorstehend genannten Säuren, insbesondere tert.-Butylacrylat und tert.-Butylmethacrylat angeführt.

Als sonstige Monomere kommen z. B. Vinylester und Vinylether in Betracht.

Besonders bevorzugt sind Olefinpolymerisate aus 50 bis 98,9, insbesondere 60 bis 94,85 Gew.-% Ethylen, und 1 bis 50, insbesondere 5 bis 40 Gew.-% eines Esters der Acryl- oder Methacrylsäure 0,1 bis 20,0, insbesondere 0,15 bis 15 Gew.-% Glycidylacrylat und/oder Glycidylmethacrylat, Acrylsäure und/oder Maleinsäureanhydrid.

Besonders geeignete funktionalisierte Kautschuke sind Ethylen-Methylmethacrylat-Glycidylmethacrylat-, Ethylen-Methylacrylat-Glycidylmethacrylat-, Ethylen-Methylacrylat-Glycidylacrylat- und Ethylen-Methylmethacrylat-Glycidylacrylat-Polymere.

Die Herstellung der vorstehend beschriebenen Polymere kann nach an sich bekannten Verfahren erfolgen, vorzugsweise durch statistische Copolymerisation unter hohem Druck und erhöhter Temperatur.

Der Schmelzindex dieser Copolymere liegt im Allgemeinen im Bereich von 1 bis 80 g/10 min (gemessen bei 190°C und 2,16 kg Belastung).

Als weitere Gruppe von geeigneten Kautschuken sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glasübergangstemperatur von mindestens 25°C, unter einem weichen Bestandteil ein Polymerisat mit einer Glasübergangstemperatur von höchstens 0°C. Diese Produkte weisen eine Struktur aus einem Kern und mindestens einer Schale auf, wobei sich die Struktur durch die Reihenfolge der Monomerenzugabe ergibt. Die weichen Bestandteile leiten sich im Allgemeinen von Butadien, Isopren, Alkylacrylaten, Alkylmethacrylaten oder Siloxanen und gegebenenfalls weiteren Comonomeren ab. Geeignete Siloxankerne können beispielsweise ausgehend von cyclischem oligomerem Octamethyltetrasiloxan oder Tetravinyltetramethyltetrasiloxan hergestellt werden. Diese können beispielsweise mit gamma-Mercaptopropylmethyldimethoxysilan in einer ringöffnenden kationischen Polymerisation, vorzugsweise in Gegenwart von Sulfonsäuren, zu den weichen Siloxankernen umgesetzt werden. Die Siloxane können auch vernetzt werden, indem z.B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich im Allgemeinen von Styrol, alpha-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeignet funktionalisierter Monomere bei der Polymerisation der letzten Schale. Geeignete funktionalisierte Monomere sind beispielsweise Maleinsäure, Maleinsäureanhydrid, Mono- oder Diester der Maleinsäure, tertiär-Butyl-(meth)acrylat, Acrylsäure, Glycidyl(meth)acrylat und Vinyloxazolin. Der Anteil an Monomeren mit funktionellen Gruppen beträgt im Allgemeinen 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt im Allgemeinen 1 : 9 bis 9 : 1, bevorzugt 3 : 7 bis 8 : 2.

Derartige Kautschuke sind an sich bekannt und beispielsweise in der EP-A-0 208 187 beschrieben. Der Einbau von Oxazingruppen zur Funktionalisierung kann z.B. gemäß EP-A-0 791 606 erfolgen.

Eine weitere Gruppe von geeigneten Schlagzähmodifiern sind thermoplastische Polyester-Elastomere. Unter Polyester-Elastomeren werden dabei segmentierte Copolyetherester verstanden, die langkettige Segmente, die sich in der Regel von Poly-(alkylen)etherglykolen und kurzkettige Segmente, die sich von niedermolekularen Diolen und Dicarbonsäuren ableiten, enthalten. Derartige Produkte sind an sich bekannt und in der Literatur, z.B. in der US 3,651,014, beschrieben. Auch im Handel sind entsprechende Produkte unter den Bezeichnungen Hytrel TM (Du Pont), Arnitel TM (Akzo) und Pelprene TM (Toyobo Co. Ltd.) erhältlich.

Selbstverständlich können auch Mischungen verschiedener Kautschuke eingesetzt werden.

Ein Beispiel für Flammschutzmittel ist beispielsweise elementarer Phosphor. In der Regel kann der elementare Phosphor mit zum Beispiel Polyurethanen oder Aminoplasten oder Dialkylphthalaten, wie z.B. Dioctylphthalat, phlegmatisiert oder gecoated werden. Außerdem sind Konzentrate von rotem Phosphor zum Beispiel in einem Polyamid, Elastomeren oder Polyolefinen geeignet. Besonders bevorzugt sind Kombinationen von elementarem Phosphor mit 1,2,3,4,7,8,9,10,13,13,14,14-Dodecachloro-1,4,4a,5,6,6a,7,10,10a,11,12,12a-dodecahydro-1,4,7,10-dimethanodibenzoe(a,e)-cyclooctan (Dechlorane® TM Plus, Occidental Chemical Corp.) und gegebenenfalls einem Synergisten, wie Antimontrioxid. Phosphorverbindungen, wie organische Phosphate, Phosphonate, Phosphinate, Phosphinoxide, Phosphine oder Phosphite sind ebenfalls bevorzugt. Als Beispiel seien Triphenylphosphinoxid und Triphenylphosphat genannt. Dieses kann allein oder vermischt mit Hexabrombenzol oder einem chlorierten Biphenyl und, wahlweise, Antimonoxid verwendet werden.

Beispiele geeigneter Phosphate sind die folgenden:

Phenylbisdodocylphosphat, Phenylbisneopentylphosphat, Phenylethylhydrogenphosphat, Phenyl-bis-(3-5,5'-trimethylhexyl)phosphat, Ethyldiphenylphosphat, 2- Ethylhexyldi(p-tolyl)phosphat, Bis-(2-ethylhexyl)phenylphosphat, Tri(nonylphenyl)phosphat, Phenylmethylhydrogenphosphat, Di(dodecyl)-p-tolylphosphat, Tri-cresylphosphat, Triphenylphosphat, Dibutylphenylphosphat, Diphenylhydrogenphosphat und Melaminpolyphosphat. Das am meisten bevorzugte Phosphat ist Triphenylphosphat. Weiter ist die Kombination von Triphenylphosphat mit Hexabrombenzol und Antimontrioxid bevorzugt.

Als Flammschutzmittel sind auch solche Verbindungen geeignet, die Phosphor-Stickstoff-Bindungen enthalten,

wie Phosphornitrilchlorid, Phosphorsäureesteramide, Phosphorsäureesteramine, Phosphorsäureamide, Phosphonsäuramide, Tris(aziridinyl)-phosphinoxid oder Tetrakis(hydroxymethyl)phosphoniumchlorid. Diese entflammungshemmenden Additive sind größtenteils im Handel erhältlich.

Weitere geeignete Flammschutzmittel sind Hydroxide des Magnesiums, welche gegebenenfalls mit Silanverbindungen beschichtet sind oder Stickstoffverbindungen wie Melamincyanurat.

Weitere halogenhaltige Flammschutzmittel sind Tetrabrombenzol, Hexachlorbenzol und Hexabrombenzol sowie halogenierte Polystyrole und Polyphenylenether.

Auch die in der DE-A-19 46 924 beschriebenen halogenierten Phthalimide können verwendet werden. Von diesen hat insbesondere N,N'-Ethylenbistetrabromphthalimid Bedeutung erlangt.

Als Nukleierungsmittel können Natriumphenylphosphinat, Aluminiumoxid, Siliciumdioxid, Nylon 22 sowie bevorzugt Talkum eingesetzt werden.

Die vorliegende Erfindung betrifft auch ein Verfahren zur Herstellung der erfindungsgemäßen Formmassen, wobei die Komponenten (A), (B), (C) und gegebenenfalls (D) und (E) in den entsprechenden Mengen vermischt, bevorzugt durch Extrusion, werden. Bei diesem Verfahren können handelsübliche Zweiwellenextruder unterschiedlicher Größe (Wellendurchmesser) eingesetzt werden. Die Temperatur beträgt bei der Extrusion 200 bis 400°C, bevorzugt 250 bis 350°C, besonders bevorzugt 250 bis 320°C.

Die vorliegende Erfindung betrifft auch Formkörper, erhältlich aus den erfindungsgemäßen thermoplastischen Formmassen.

Bevorzugt handelt es sich bei diesen um Bauteile für den Heizungsbau, für Außenanwendungen, der Beleuchtungstechnik, dem Elektro- und Elektroniksektor oder dem KFZ-Bereich, z.B. KFZ-Kühler, Motorabdeckungen, Heizungsverkleidungen, - abdeckungen, Lampenfassungen, Saugrohre, Zylinderkopfhauben, Kühlwasserkästen, Ventile, Pumpengehäuse, Rohrleitungen und Ladeluftkühler (-endkappen).

Die erfindungsgemäßen thermoplastischen Formmassen zeichnen sich durch eine hohe Stabilität gegen Wärmeeinwirkung und Hydrolyse aus. Aus diesen können Bauteile hergestellt werden, die an Stellen oder in Situationen eingesetzt werden, bei denen es auf eine hohe Stabilität gegen Wärme und Einwirkung von Flüssigkeiten ankommt. Diese Bauteile zeichnen sich dadurch aus, dass sie wesentlich unanfälliger gegen wärme- und/oder hydrolysebedingte Schäden sind, und somit das Risiko eines Ausfalls der Bauteile begrenzt werden kann. Des Weiteren können die erfindungsgemäßen Bauteile auch unter höheren Temperaturen eingesetzt werden, bei denen bislang der Einsatz von Polymeren nicht möglich war, und kostenintensivere schwere Metalle oder Metalllegierungen eingesetzt werden mussten.

Beispiele

Es wurden folgende Komponenten eingesetzt:

A1) PA66: VZ = 149 ml/g, AEG = 46 mmol/kg, CEG = 65 mmol/kg (Adipinsäure geregelt)
A2) PA66: VZ = 150 ml/g, AEG = 84 mmol/kg, CEG = 19 mmol/kg (HMD geregelt) A3) PA6: VZ = 150 ml/g, AEG = 36 mmol/kg, CEG = 51 mmol/kg (Propionsäure geregelt)
A4) PA6: VZ = 150 ml/g, AEG = 84 mmol/kg, CEG = 19 mmol/kg (HMD geregelt)
B) Schnittglasfaser für PA, 10 μm Durchmesser
C) Wärmestabilisator: CuI/KJ-Mischung (Molverhältnis 1/4)
D) Entformungshilfsmittel: Calciumstearat

Zusammensetzungen der Formmassen:

| | A1 [%] | A2 [%] | A3 [%] | A4 [%] | B [%] | C [%] | D [%] | VZ [ml/g] |
|---|---|---|---|---|---|---|---|---|
| Vgl.1 | 69,6 | | | | 30 | 0,3 | 0,3 | 148 |
| Vgl.2 | | | 69,6 | | 30 | 0,3 | 0,3 | 147 |
| | | | | | | | | |
| Bsp. 1 | | 69,6 | | | 30 | 0,3 | 0,3 | 149 |
| Bsp.2 | | | | 69,6 | 30 | 0,3 | 0,3 | 148 |

VZ: c = 5 g/l in 96 %iger Schwefelsäure, nach ISO 307
AEG und CEG wurden bestimmt gemäß Titration (s. S. 3/4)
Die Molprozente der Diamin geregelten Ketten betrug für

A1: 17 %
A2: 66 %
A3: 0 % (kein Diamin vorhanden)
A4: 63 %
und wurden für A1 und A2, sowie für A4 wie folgt berechnet:

Für A1 und A2:
Molprozent ($X_{AA}$) Diamin geregelter Ketten:

$$X_{AA} = \left(\frac{AEG}{AEG + CEG}\right)^2 \times 100\ \%$$

Für A4:

$$X_{AA} = \frac{AEG - CEG}{AEG + CEG} \times 100\ \%$$

Die Formmassen wurden auf einem ZSK 40 bei einem Durchsatz von 30 kg/h (150 rpm) und ca. 280°C flachem Temperaturprofil hergestellt.
Mechanikkennwerte vor und nach Hydrolyselagerung in Glysantin G48/Wasser (1/1) bei 130°C (V1, B1) oder 120°C (V2, B2) im Autoklav:

Zugversuch nach ISO527

| | E-Modul [MPa] | | | | | Bruchspannung [MPa] | | | | |
|---|---|---|---|---|---|---|---|---|---|---|
| | 0 h | 250 h | 500 h | 750 h | 1000 h | 0 h | 250 h | 500 h | 750 h | 1000 h |
| V1 | 9900 | 4250 | 4700 | 4250 | 4240 | 193 | 78 | 78 | 37 | 35 |
| V2 | 9600 | 3700 | 3970 | 3950 | 3940 | 181 | 82 | 73 | 66 | 42 |
| B1 | 9800 | 4250 | 4750 | 4350 | 4320 | 196 | 81 | 85 | 47 | 43 |
| B2 | 9400 | 3680 | 3920 | 3910 | 3940 | 179 | 83 | 75 | 68 | 47 |

| | Bruchdehnung [%] | | | | |
|---|---|---|---|---|---|
| | 0 h | 250 h | 500 h | 750 h | 1000 h |
| V1 | 3,3 | 3,7 | 2,8 | 1,1 | 1,0 |
| V2 | 3,5 | 6,1 | 4,8 | 3,1 | 1,5 |
| B1 | 3,2 | 3,8 | 3,2 | 1,6 | 1,3 |
| B2 | 3,6 | 6,5 | 5,1 | 3,4 | 1,8 |

Schlagbiegeversuch nach ISO179-2

| | Schlagzähigkeit [kJ/m$^2$] | | | | |
|---|---|---|---|---|---|
| | 0 h | 250 h | 500 h | 750 h | 1000 h |
| V1 | 91 | 67 | 51 | 25 | 23 |
| V2 | 101 | 82 | 38 | 14 | 8 |
| B1 | 79 | 73 | 59 | 28 | 27 |
| B2 | 100 | 89 | 45 | 15 | 9 |

## Patentansprüche

**1.** Thermoplastische Formmassen, enthaltend:

(A) 20 - 85 Gew.-% mindestens eines Polyamids mit einer Zahl an Aminoendgruppen von ≥ 50 mmol/kg,
(B) 14,9 - 60 Gew.-% Glasfasern,
(C) 0,01 - 2 Gew.-% mindestens eines Wärmestabilisators,
(D) 0 - 1,5 Gew.-% mindestens eines Entformungshilfsmittels und
(E) 0 - 30 Gew.-% weiterer Zusatzstoffe,

wobei die Summe der Gewichtsprozente von (A) - (E) 100 beträgt.

**2.** Formmassen nach Anspruch 1, in welchen ein lineares, aliphatisches Polyamid A) eingesetzt wird.

**3.** Formmassen nach den Ansprüchen 1 oder 2, wobei das Polyamid A) eine Zahl der primären Aminoendgruppen ≥ 60 mmol/kg aufweist.

**4.** Formmassen nach einem der Ansprüche 1 bis 3, in denen das Polyamid A) einen molaren Anteil an mit einem Diamin geregelten Ketten von ≥ 30 mol-% aufweist.

**5.** Formmassen nach einem der Ansprüche 1 bis 4, wobei das Polyamid A) eine Viskositätszahl von 100 bis 250 ml/g aufweist.

**6.** Formmassen nach einem der Ansprüche 1 bis 5, in welchen die Glasfasern einen Durchmesser von 5 - 15 µm aufweisen.

**7.** Formmassen nach einem der Ansprüche 1 bis 6, in denen der Wärmestabilisator C) ausgewählt ist aus der Gruppe bestehend aus Verbindungen des ein- und zweiwertigen Kupfers, Stabilisatoren auf Basis sekundärer aromatischer Aminen, Stabilisatoren auf Basis sterisch gehinderter Phenole oder deren Mischungen.

**8.** Formmassen nach einem der Ansprüche 1 bis 7, wobei das Polyamid A) ausgewählt ist aus der Gruppe bestehend aus Polyhexamethylenadipinsäureamid (Nylon 66, Polyamid 66), einer Mischung von Polyamiden mit einem Polyamid 66-Anteil von wenigstens 80 Gew.-% oder einem Copolyamid, dessen Bausteine zu wenigstens 80 Gew.-% von Adipinsäure und Hexamethylendiamin ableitbar sind, Polycaprolactam (Nylon 6, Polyamid 6) oder deren Mischungen.

**9.** Verwendung der thermoplastischen Formmassen nach einem der Ansprüche 1 bis 8 zur Herstellung von Fasern, Folien, Formkörpern.

**10.** Formkörper jeglicher Art, erhältlich aus den thermoplastischen Formmassen gemäß den Ansprüchen 1 bis 8.

## Claims

**1.** A thermoplastic molding composition, comprising

(A) from 20 to 85% by weight of at least one polyamide whose number of amino end groups is ≥ 50 mmol/kg,
(B) from 14.9 to 60% by weight of glass fibers.
(C) from 0.01 to 2% by weight of at least one heat stabilizer,
(D) from 0 to 1.5% by weight of at least one mold-release agent, and
(E) from 0 to 30% by weight of other additives,

where the total of the percentages by weight of (A) - (E) is 100.

2. The molding composition according to claim 1, in which a linear, aliphatic polyamide A) is used.

3. The molding composition according to claim 1 or 2, where the number of primary amino end groups in the polyamide A) is ≥ 60 mmol/kg.

4. The molding composition according to any of claims 1 to 3, in which the molar proportion of chains regulated by a diamine is ≥ 30 mol% in the polyamide A).

5. The molding composition according to any of claims 1 to 4, where the viscosity number of the polyamide A) is from 100 to 250 ml/g.

6. The molding composition according to any of claims 1 to 5, in which the diameter of the glass fibers is from 5 to 15 μm.

7. The molding composition according to any of claims 1 to 6, in which the heat stabilizer C) has been selected from the group consisting of compounds of mono- and divalent copper, stabilizers based on secondary aromatic amines, stabilizers based on sterically hindered phenols, and mixtures of these.

8. The molding composition according to any of claims 1 to 7, where the polyamide A) has been selected from the group consisting of polyhexamethyleneadipamide (nylon-6,6), a mixture of polyamides with nylon-6,6 content of at least 80% by weight or a copolyamide having at least 80% by weight of units derivable from adipic acid and from hexamethylenediamine, polycaprolactam (nylon-6), and mixtures of these.

9. The use of the thermoplastic molding compositions according to any of claims 1 to 8 for production of fibers, of foils, or of moldings.

10. A molding of any type, obtainable from the thermoplastic molding compositions according to claims 1 to 8.

**Revendications**

1. Matériaux de moulage thermoplastiques, contenant :

(A) 20 à 85 % en poids d'au moins un polyamide ayant un nombre de groupes terminaux amino ≥ 50 mmol/kg,
(B) 14,9 à 60 % en poids de fibres de verre,
(C) 0,01 à 2 % en poids d'au moins un thermostabilisateur,
(D) 0 à 1,5 % en poids d'au moins un adjuvant de démoulage et
(E) 0 à 30 % en poids d'additifs supplémentaires,

la somme des pourcentages en poids de (A) à (E) étant de 100.

2. Matériaux de moulage selon la revendication 1, dans lesquels un polyamide A) aliphatique linéaire est utilisé.

3. Matériaux de moulage selon les revendications 1 ou 2, dans lesquels le polyamide A) présente un nombre de groupes terminaux amino primaires ≥ 60 mmol/kg.

4. Matériaux de moulage selon l'une quelconque des revendications 1 à 3, dans lesquels le polyamide A) présente une proportion molaire de chaînes régulées avec une diamine ≥ 30 % en moles.

5. Matériaux de moulage selon l'une quelconque des revendications 1 à 4, dans lesquels le polyamide A) présente un indice de viscosité de 100 à 250 ml/g.

6. Matériaux de moulage selon l'une quelconque des revendications 1 à 5, dans lesquels les fibres de verre présentent un diamètre de 5 à 15 $\mu$m.

7. Matériaux de moulage selon l'une quelconque des revendications 1 à 6, dans lesquels le thermostabilisateur C) est choisi dans le groupe constitué par les composés de cuivre mono- et bivalent, les stabilisateurs à base d'amines aromatiques secondaires, les stabilisateurs à base de phénols à encombrement stérique ou leurs mélanges.

8. Matériaux de moulage selon l'une quelconque des revendications 1 à 7, dans lesquels le polyamide A) est choisi dans le groupe constitué par l'amide de l'acide polyhexaméthylèneadipique (nylon 66, polyamide 66), un mélange de polyamides ayant une proportion de polyamide 66 d'au moins 80 % en poids ou un copolyamide dont les constituants peuvent être dérivés à au moins 80 % en poids d'acide adipique et d'hexaméthylènediamine, le polycaprolactame (nylon 6, polyamide 6) ou leurs mélanges.

9. Utilisation des matériaux de moulage thermoplastiques selon l'une quelconque des revendications 1 à 8 pour la fabrication de fibres, de films, de corps moulés.

10. Corps moulé d'un type quelconque, pouvant être obtenu à partir des matériaux de moulage thermoplastiques selon les revendications 1 à 8.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9708222 A
- EP 0129974 A2
- EP 1424361 A1
- JP 3200868 B
- WO 9226865 A
- WO 0226865 A
- US 2071250 A
- US 2071251 A
- US 2130523 A
- US 2130948 A
- US 2241322 A
- US 2312966 A
- US 2512606 A
- US 3393210 A
- EP 0129195 A
- EP 0129196 A
- EP 0702058 A
- EP 0038094 A
- EP 0038582 A
- EP 0039524 A
- DE 10117715
- EP 0208187 A
- EP 0791606 A
- US 3651014 A
- DE 1946924 A


### In der Beschreibung aufgeführte Nicht-Patentliteratur


- Kunststoff Handbuch, 3. Technische Thermoplaste, 4. Polyamide. Carl Hanser Verlag, 1998, 77-84
- **R. Gächter ; H. Müller.** Taschenbuch der Kunststoffadditive. Carl Hanser-Verlag, 1983, 494-510